# EUROPEAN PATENT APPLICATION

(11) **EP 4 552 769 A1**
(43) Date of publication of application: **14.05.2025**
(21) Application number: 24190582.7
(22) Date of filing: 24.07.2024
(51) Int. Cl.: B22F 3/15, B22F 5/00, B22F 7/06, B22F 7/08, B23K 20/02, B23K 35/30, B32B 15/01, C22C 19/03, C22C 33/00

(54) **HOT ISOSTATIC PRESSING TO FORM A DIFFUSION BOND REGION**

(30) Priority: 07.11.2023 US 202318503441
(71) Applicant: General Electric Company, Cincinnati, Ohio 45215-6301 (US)
(72) Inventor: SHEN, Chen, Niskayuna, 12309 (US); HUANG, Shenyan, Niskayuna, 12309 (US)
(74) Representative: Openshaw & Co.

(57) **Abstract**

Methods are generally provided for forming a multi-metallic component (30). The method can include: positioning a nickel-based layer (24) between an iron-based metal alloy (12) and a nickel-based metal alloy (18) and applying heat and pressure to the iron-based metal alloy (12) and a nickel-based metal alloy (18) such that the nickel-based layer (24) forms a diffusion bond region (32). The nickel-based layer (24) comprises greater than 50% by weight nickel, and the iron-based metal alloy (12), the nickel-based metal alloy (18), or both is in a powder form. The diffusion bond region (32) is between a first region (14) comprising the iron-based metal alloy (12) and a second region (20) comprising the nickel-based metal alloy (18) to form the multi-metallic component (30).

## Description

### FEDERALLY SPONSORED RESEARCH

This invention was made with government support under contract number DE-EE0008996 awarded by the Department of Energy. The U.S. government may have certain rights in the invention.

### FIELD

The present disclosure generally relates to hot isostatic pressing bonding of multi-metallic components together.

### BACKGROUND

Hot isostatic pressing (HIP) is a manufacturing process that may be used to reduce the porosity of metals. Generally, the HIP process subjects a component to both elevated temperature and pressure to consolidate the original material. HIP processing allows for metal powders to be turned to compact solids.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a cross-sectional view of a HIP construction prior to HIP according to one embodiment;
FIG. 2 is a cross-sectional view of a multi-metallic component formed from the HIP construction of FIG. 1 after HIP according to one embodiment;
FIG. 3 is a diagram of a HIP method for forming a multi-metallic component according to one embodiment;
FIG. 4 shows the amount of prior particle boundary (PPB) particles at the interface with varying Ni-based layers simulated according to the Examples; and
FIG. 5 shows the ultimate tensile strength (UTS) at different temperatures of samples made according to the Examples.

### DEFINITIONS

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

In the present disclosure, when a layer is being described as "on" or "over" another layer or substrate, it is to be understood that the layers can either be directly contacting each other or have another layer or feature between the layers, unless expressly stated to the contrary. Thus, these terms are simply describing the relative position of the layers to each other and do not necessarily mean "on top of" since the relative position above or below depends upon the orientation of the device to the viewer.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth.

As used herein, the term "substantially free" is understood to mean completely free of said constituent, or inclusive of trace amounts of same. "Trace amounts" are those quantitative levels of chemical constituent that are barely detectable and provide no benefit to the functional or aesthetic properties of the subject composition. The term "substantially free" also encompasses completely free.

The term "unitary" as used herein denotes that the final component has a construction in which the integrated portions are inseparable and is different from a component comprising a plurality of separate component pieces that have been joined together but remain distinct and the single component is not inseparable (i.e., the pieces may be re-separated). Thus, unitary components may comprise generally substantially continuous pieces of material or may comprise a plurality of portions that are permanently bonded to one another. In any event, the various portions forming a unitary component are integrated with one another such that the unitary component is a single piece with inseparable portions.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

HIP diffusion bonding of dissimilar solid metal components sometimes uses a transition layer to serve as a diffusion barrier to mitigate formation of brittle intermetallics and/or reduce stress induced by a large mismatch in coefficient of thermal expansion of the dissimilar metals. For example, Nb and Cu transitional layers (in hundreds of µm) may be used to HIP bond solid steel with a solid Ti64 alloy. For example, a thin coating of Ni and Ti (e.g., about 80 nm) may be physical vapor deposited (PVD) onto the interface to prevent surface from oxidation during HIP bonding between two Ni superalloy components.

During HIP diffusion bonding to form a multi-metallic component from at least one metallic powder (e.g., a metallic powder bonded to a solid metallic or the bonding of two metallic powders), multiple metallic powders may be joined. Generally, a powder is composed of a plurality of particles, with the particles generally having a common composition and a similar relative size. For example, HIP may be utilized to form a multi-metallic component from a plurality of iron-based alloy particles and a plurality of nickel-based alloy particles, which are separately positioned (i.e., not mixed). Upon HIP, the plurality of iron-based alloy particles forms a first region of the multi-metallic component, and the plurality of nickel-based alloy particles forms a second region of the multi-metallic component.

At an interface between the first region (the iron-based alloy region) and the second region (the nickel-based alloy region), it has been found that excess particles form along prior particle boundaries (PPBs) of the respective powder material near the bonding interface of the iron-based alloy particles and the nickel-based alloy particles. The excess particles are primarily of an intermetallic carbide (e.g., MC) or intermetallic nitride (MN), where M is a metallic element. Without wishing to be bound by any particular theory, it is believed that these excess particles of MC, MN, or a mixture thereof are formed by reaction between a metallic element M (e.g., Ti, Nb) that diffused from the nickel-based alloy to react with carbon, nitrogen, or both diffusing out of the iron-based alloy. PPB decoration of these excess particles near the interface is a unique microstructure weakness encountered only in HIP bonding that involves at least one powder metal (e.g., powder-to-powder or powder-to-solid). It has been found that these excessive particles degrade mechanical properties at the bonding interface, as microvoids and cracks form along the particle decorated PPBs near or within the interface.

Methods are generally provided that may inhibit or even prevent the formation of such intermetallic carbides and intermetallic nitrides in HIP to form a multi-metallic component from at least one metallic powder (e.g., a metallic powder bonded to a solid metallic or the bonding of two metallic powders). In one embodiment, multiple metallic powders may be joined, such as from a plurality of iron-based alloy particles and a plurality of nickel-based alloy particles.

The methods may include the positioning of a nickel-based layer between an iron-based alloy and a nickel-based alloy. Upon HIP, such as by applying heat and pressure to the iron-based alloy and a nickel-based alloy, the nickel-based layer forms a diffusion bond region between a first region comprising the iron-based alloy and a second region comprising the nickel-based alloy to form a multi-metallic component. In one embodiment, the nickel-based layer may be substantially free from any carbide and/or nitride forming metal elements so as to inhibit the formation of such excess particles within the diffusion bond region. Thus, the nickel-based layer, which is essentially free of carbides and nitrides forming elements, reduces formation of the detrimental intermetallic carbides and nitrides at the joining interface during HIP processing.

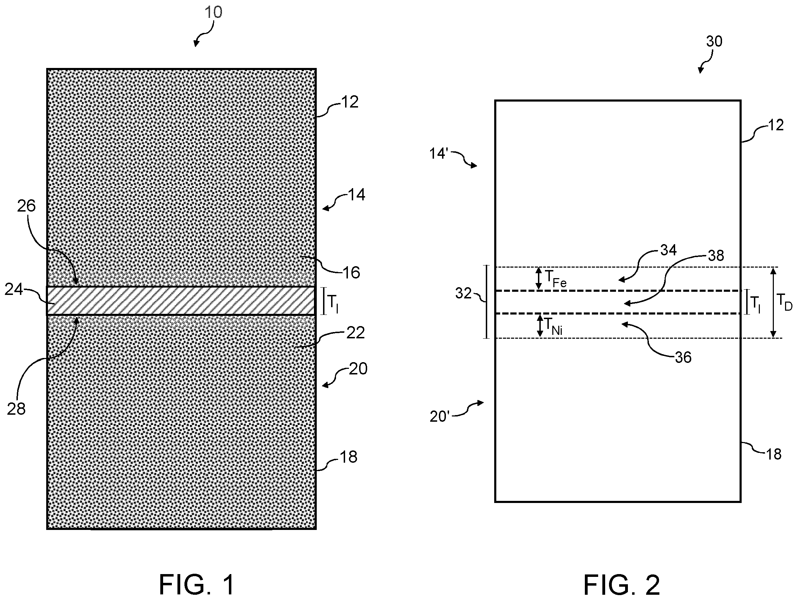

Referring to FIG. 1, a HIP construction 10 is generally shown. An iron-based alloy 12 defines a first region 14 in the HIP construction 10. In the embodiment shown, the iron-based alloy 12 is in the form of a plurality of iron-based alloy particles 16. Additionally, a nickel-based alloy 18 defines a second region 20 in the HIP construction 10. In the embodiment shown, the nickel-based alloy 18 is in the form of a plurality of nickel-based alloy particles 22.

A nickel-based layer 24 is positioned between the iron-based alloy 12 and the nickel-based alloy 18. In the embodiment shown, the nickel-based layer 24 defines a first surface 26 that is in direct contact with the first region 14 and a second surface 28 that is in direct contact with the second region 20. Thus, the nickel-based layer 24 is in direct contact with the iron-based alloy 12 at the first surface 26 and is in direct contact with the nickel-based alloy 18 at the second surface 28. Nickel is generally ductile without embrittling the interface. A small addition of nickel is compatible with many iron-based alloys and with many nickel-based alloys, considering interdiffusion of the thin Ni-based layer 24 into the iron-based alloy 12 and the nickel-based alloy 18 after the HIP cycle. Thus, the nickel from the nickel-based layer 24 causes minimal effect to the properties of the first region 14 and the second region 20.

During HIP at sufficiently high temperatures and pressure, metal alloy elements from the iron-based alloy 12 and the nickel-based alloy 18 diffuse into the nickel-based layer 24. FIG. 2 shows a multi-metallic component 30 with a consolidated first region 14' and a consolidated second region 20' joined together via a diffusion bond region 32. During HIP, the diffusion of the metal alloy elements from the iron-based alloy 12 and the nickel-based alloy 18 diffuse into the nickel-based layer 24 and diffusion of elements from the nickel-based layer 24 into the iron-based alloy 12 and the nickel-based alloy 18 (FIG. 1) so as to reduce the composition difference between the iron-based alloy 12 and the nickel-based alloy 18. Additionally, the concentration of carbide and/or nitride forming metals within a resulting diffusion bond region 32 is maintained below a threshold of excessive carbide and/or nitride forming metals. The composition and thickness of the nickel-based layer 24 may be selected to maintain the concentration of any carbide and/or nitride forming metals below a threshold of excessive carbide and/or nitride forming metals in the diffusion bond region 32.

In particular embodiments, the nickel-based layer 24 (FIG. 1) has a sufficient amount of nickel therein to help maintain the concentration of any carbide and/or nitride forming metals below a threshold of excessive carbide and/or nitride forming metals in the resulting diffusion bond region 32. For example, the nickel-based layer 24 (FIG. 1) may include greater than 50% by weight nickel (e.g., greater than 75% by weight nickel, greater than 90% by weight nickel, such as greater than 95% by weight nickel). In particular embodiments, the nickel-based layer 24 (FIG. 1) is substantially free from a carbide forming element, a nitride forming element, or both (e.g., substantially free from Ti, Ta, Hf, Nb, and W). In one particular embodiment, the nickel-based layer 24 (FIG. 1) consists essentially of nickel, so as to be substantially free of any other element other than unavoidable impurities. Thus, the diffusion bond region 32 may be, in particular embodiments, substantially free from any carbide and/or nitride therein.

In particular embodiments, the nickel-based layer 24 (FIG. 1) has a sufficient thickness between the first surface 26 and the second surface 28 to help maintain the concentration of any carbide and/or nitride forming metals below a threshold of excessive carbide and/or nitride forming metals in the resulting diffusion bond region 32. However, if the nickel-based layer 24 (FIG. 1) is too thick, then the diffusion bond region 32 may have relatively low bond strength (e.g., relatively low ultimate tensile strength, "UTS") with the iron-based alloy 12 and the nickel-based alloy 18 in the resulting unitary multi-metallic component 30. Thus, if the nickel-based layer 24 (FIG. 1) is too thick, then the diffusion bond region 32 may be a weak point in the resulting unitary multi-metallic component 30. The thickness of the nickel-based layer 24, therefore, is selected to minimize formation of carbides and/or nitrides along PPBs at or near the diffusion bond region 32, as well as allowing interdiffusion so that a cross interface mechanical test does not fail at the bond region. In certain embodiments, the diffusion bond region 32 may be substantially free from PPB particles (e.g., substantially free from intermetallic carbides, intermetallic nitrides, or both along PPB of the diffusion bond region 32). The nickel-based layer 24 may have an initial thickness Ti (prior to HIP) that is greater than 10 µm, such as 10 µm to 100 µm (e.g., an initial thickness of 12 µm to 75 µm, such as 15 µm to 50 µm). It is noted that the initial thickness T_{I} (prior to HIP) of the nickel-based layer 24 may vary depending on the composition of the iron-based alloy 12 and the nickel-based alloy 18, the treatment temperature, the treatment period, or combinations of these variables.

The nickel-based layer 24 may be positioned between the iron-based alloy 12 and the nickel-based alloy 18 in the form of a Ni-based powder (e.g., a plurality of Ni-based particles), may be deposited onto the first powder (e.g., via chemical vapor deposition, physical vapor deposition, etc.), or may be positioned as a thin film or foil.

Referring again to FIG. 1, the HIP method may be performed by applying heat and pressure to the HIP construction 10. When the first region 14 and the second region 20 are formed from a plurality of particles, the HIP method may consolidate the respective particles into a solid region. For example, when the first region 14 of the HIP construction 10 is formed from a plurality of iron-based alloy particles 16 (FIG. 1), performing the HIP method forms a multi-metallic component 30 (FIG. 2) with a consolidated first region 14' of iron-based alloy 12 in a solid, compressed form. Similarly, when the second region 20 of the HIP construction 10 is formed from a plurality of nickel-based alloy particles 22 (FIG. 1), performing the HIP method forms a multi-metallic component 30 (FIG. 2) with a consolidated second region 20' of nickel-based alloy 18 in a solid, compressed form.

In one embodiment, HIP may be performed by heating the HIP construction 10 (FIG. 1) to a temperature of 900 °C to 1300 °C and pressing with an isostatic pressure that is 70 MPa or greater (e.g., 70 MPa to 350 MPa) to form the multi-metallic component 30 (FIG. 2). Without wishing to be bound by any particular theory, it is believed that the combination of a temperature of 900 °C or greater (e.g., 900 °C to 1300 °C) at an isostatic pressure of about 70 MPa or greater ensures sufficient density (e.g., a density of 99% or greater) of the resulting multi-metallic component 30 within the first region 14, the second region 20, and the diffusion bond region 32. In embodiments, the isostatic pressure may be an isostatic gas pressure formed from an inert gas in a high pressure containment vessel (not shown). Generally, the inert gas is unreactive with the iron-based alloy 12, the nickel-based alloy 18, and the nickel-based layer 24, and may be removed (e.g., outgassed) from the high pressure containment vessel at the HIP processing conditions so as to avoid undesired chemical interactions therein. The HIP method may include holding the HIP construction 10 at the temperature and pressure for a desired treatment period (e.g., 30 minutes to 10 hours, such as 2 hours to 6 hours) sufficient to consolidate the HIP construction 10 to the desired density.

As stated, the nickel-based layer 24 diffuses into the iron-based alloy 12 of the first region 14 and the nickel-based alloy 18 of the second region 20. In particular embodiments, the diffusion bond region 32 has a diffusion thickness T_{D} (after HIP) that is greater than the initial thickness T_{I} (prior to HIP) of the nickel-based layer 24 (FIG. 1).

Generally, the diffusion bond region 32 includes multiple subregions. Referring to FIG. 2, a first diffusion subregion 34 extends into the consolidated first region 14'. Generally, the first diffusion subregion 34 has an increased nickel concentration compared to an initial nickel concentration within the consolidated first region 14' of the multi-metallic component 30, since nickel from the nickel-based layer 24 (FIG. 1) has diffused into the consolidated first region 14' to form the first diffusion subregion 34. This first diffusion subregion 34 has a first diffusion subregion thickness T_{Fe}.

Similarly, a second diffusion subregion 36 extends into the consolidated second region 20'. Generally, the second diffusion subregion 36 has an increased nickel concentration compared to an initial nickel concentration within the consolidated second region 20, of the multi-metallic component 30, since nickel from the nickel-based layer 24 (FIG. 1) has diffused into the consolidated second region 20' to form the second diffusion subregion 36. This second diffusion subregion 36 has a second diffusion subregion thickness T_{Ni}. Depending on the composition of the iron-based alloy 12 and the nickel-based alloy 18, the diffusion rates (and corresponding depths) may be different. For example, in one embodiment, the nickel from the nickel-based layer 24 (FIG. 1) may be more soluble in the nickel-based alloy 18 (when compared to the iron-based alloy 12), allowing for more nickel to diffuse into the second region 20 than into the first region 14. Thus, in such an embodiment, the second diffusion subregion thickness T_{Ni} may be greater than the first diffusion subregion thickness T_{Fe}. In other embodiments, the diffusion rate and resulting depth may be substantially the same, such that the second diffusion subregion thickness T_{Ni} is substantially equal to the first diffusion subregion thickness T_{Fe}.

An interface diffusion subregion 38 is between the first diffusion subregion 34 and the second diffusion subregion 36. This interface diffusion subregion 38 may have an increased nickel concentration when compared to the first diffusion subregion 34 and the second diffusion subregion 36, since the interface diffusion subregion 38 is most closely associated with the original nickel-based layer 24 (FIG. 1). In one embodiment, at least one of the first diffusion subregion 34, the second diffusion subregion 36, or the interface diffusion subregion 38 is substantially free from any metallic carbides, any metallic nitrides, or both. For example, the first diffusion subregion 34, the second diffusion subregion 36, and the interface diffusion subregion 38 are substantially free from any metallic carbides, any metallic nitrides, or both.

It should be noted that the first diffusion subregion 34, the second diffusion subregion 36, and the interface diffusion subregion 38 are described herein so as to describe the diffusion of materials after HIP processing; thus, the diffusion region 32 may not have boundaries between the first diffusion subregion 34, the second diffusion subregion 36, and the interface diffusion subregion 38. Thus, the multi-metallic component 30 may be a unitary component after the HIP processing.

The iron-based alloy 12 of the first region 14 (FIG. 1) and the consolidated first region 14' (FIG. 2) generally includes iron in at least 50% by weight of the iron-based alloy 12. In one embodiment, the iron-based alloy 12 may be a steel alloy, including but not limited to ferritic steels, austenitic steels, and martensitic steels. For example, the iron-based alloy 12 may be a SAE 316L grade stainless steel, which includes primary alloying elements of chromium, nickel, and molybdenum, with up to 1% by weight of silicon, phosphorus, and/or sulfur. For instance, the iron-based alloy 12 may be a SAE 316L grade stainless steel that includes, by weight, 16% to 18% chromium, 10% to 12% nickel, and 2% to 3% molybdenum, up to 1% silicon, up to 1% phosphorus, up to 1% sulfur, and a balance of iron and unavoidable impurities.

The nickel-based alloy 18 of the second region 20 (FIG. 1) and the consolidated second region 20' (FIG. 2) generally includes nickel in at least 40% by weight of the nickel-based alloy 18. In one embodiment, the nickel-based alloy 18 may be a nickel superalloy. For example, the nickel-based alloy 18 may be a precipitation strengthened nickel-base superalloy.

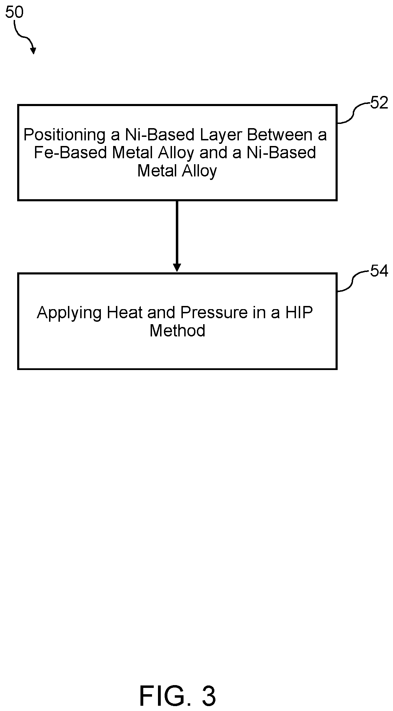

FIG. 3 shows a diagram of a HIP method 50, such as suitable for forming a multi-metallic component 30 as in FIG. 2 from a HIP construction 10 as in FIG. 1. At 52, a nickel-based layer is positioned between an iron-based alloy and a nickel-based alloy, such as shown in FIG 1. At 54, heat and pressure can be applied in a HIP method, as described above to form a multi-metallic component 30 as shown in FIG. 2. In one embodiment, the HIP method 50 may be performed in a high pressure containment vessel (e.g., a capsule, mold, etc.). When formed from two powders, the first powder (either a plurality of iron-based alloy particles or a plurality of nickel-based alloy particles) may be loaded into the high pressure containment vessel. Optionally, the first powder may be heat treated (e.g., under vacuum) at a heat treatment temperature of 1000 °C to 1200 °C to form a flat surface on the first powder for receiving the Ni-based layer. Then, the Ni-based layer may be positioned on the first powder. The Ni-based layer may be in the form of a Ni-based powder (e.g., a plurality of Ni-based particles), may be deposited via CVD, PVD, etc., or may be positioned as a thin film or foil. Then, the second powder (the other of the plurality of iron-based alloy particles or the plurality of nickel-based alloy particles) may be loaded into the high pressure containment vessel onto the Ni-based layer. Optionally, the first powder, the Ni-based layer, and the second powder may then be packed within the high pressure containment vessel (e.g., vibration packing). The high pressure containment vessel may also be purged (e.g., with an inert gas) and outgassed to remove gas from the high pressure containment vessel. Then, the HIP cycle can be performed at the treatment temperature (e.g., 900 °C to 1300 °C) at an isostatic pressure of about 70 MPa or greater.

### EXAMPLES

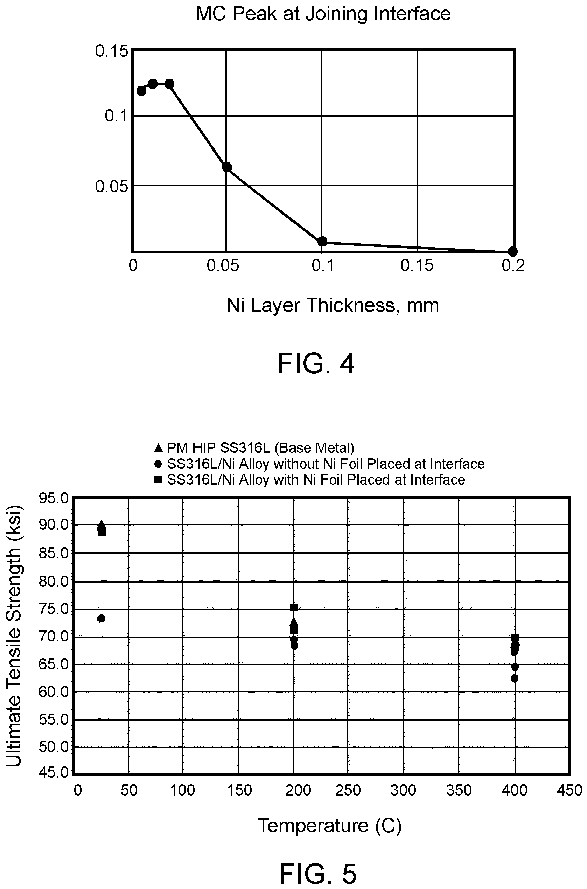

Diffusion simulation (i.e., modeling) was utilized to predict carbide particle formation at different Ni-based layer thicknesses. FIG. 4 shows that the amount of PPB particles at the interface starts to decrease when the nickel-based layer is thicker than 20 µm. It is noted that the predictions are for equilibrium amount, and that the actual amount in the material may be less because of kinetics (finite time) of MC particles formation.

Real examples were made using a 25.4 µm (1 mil) Ni-foil (as the nickel-based layer) placed at interface of a plurality of steel alloy (SS316L) particles (as the iron-based alloy) and a plurality of Ni-based alloy particles (as the nickel-based alloy). HIP bonding was performed to form a multi-metallic component. The cross-interface tensile properties showed little to no penalty in 0.2% yield strength. FIG. 5 shows improved ultimate tensile strength (UTS) and tensile ductility, compared to bimetallic powder HIP without using Ni foil at the interface. In fact, the cross-interface tensile failure locations changed from the interface rupture to rupture within SS316L base metal.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects are provided by the subject matter of the following clauses:

A method of forming a multi-metallic component, the method comprising: positioning a nickel-based layer between an iron-based alloy and a nickel-based alloy, wherein the nickel-based layer comprises greater than 50% by weight nickel, and wherein the iron-based alloy, the nickel-based alloy, or both is in a powder form; and applying heat and pressure to the iron-based alloy and the nickel-based alloy such that the nickel-based layer forms a diffusion bond region between a first region comprising the iron-based alloy and a second region comprising the nickel-based alloy to form the multi-metallic component.

The method of any preceding clause, wherein the iron-based alloy comprises a plurality of iron-based alloy particles, and wherein the nickel-based alloy comprises a plurality of nickel-based alloy particles.

The method of any preceding clause, wherein the nickel-based layer defines a first surface and an opposite second surface, wherein positioning the nickel-based layer between the iron-based alloy and the nickel-based alloy comprises positioning the first surface in direct contact with the iron-based alloy and positioning the opposite second surface in direct contact with the nickel-based alloy.

The method of any preceding clause, wherein the nickel-based layer is substantially free from a carbide forming element.

The method of any preceding clause, wherein the nickel-based layer is substantially free from a nitride forming element.

The method of any preceding clause, wherein the nickel-based layer is substantially free from Ti, Ta, Hf, Nb, and W.

The method of any preceding clause, wherein the nickel-based layer comprises greater than 90% by weight nickel.

The method of any preceding clause, wherein the nickel-based layer consists essentially of nickel.

The method of any preceding clause, wherein the nickel-based layer has an initial thickness of 5 µm to 100 µm.

The method of any preceding clause, wherein the nickel-based layer has an initial thickness of 15 µm to 50 µm.

The method of any preceding clause, wherein the diffusion bond region is substantially free from prior particle boundary particles.

The method of any preceding clause, wherein the diffusion bond region has a diffusion thickness that is distributed more into the nickel-based alloy than into the iron-based alloy.

The method of any preceding clause, wherein the iron-based alloy is a steel alloy.

The method of any preceding clause, wherein the nickel-based alloy is a nickel-based superalloy.

The method of any preceding clause, wherein applying heat and pressure comprises heating to a temperature of 900 °C to 1300 °C at an isostatic pressure that is 70 MPa or greater.

A unitary multi-metallic component formed according to the method of any preceding clause.

A unitary multi-metallic component, comprising: an iron-based alloy defining a first region of the unitary multi-metallic component; a nickel-based alloy defining a second region of the unitary multi-metallic component; and a diffusion bond region extending into the iron-based alloy and the nickel-based alloy to join the first region to the second region within the unitary multi-metallic component.

The unitary multi-metallic component of any preceding clause, wherein the diffusion bond region has a first diffusion subregion within the first region, wherein the first diffusion subregion has an increased nickel concentration compared to an initial nickel concentration within the first region of the unitary multi-metallic component.

The unitary multi-metallic component of any preceding clause, wherein the diffusion bond region has a second diffusion subregion within the second region, wherein the second diffusion subregion has an increased nickel concentration compared to an initial nickel concentration within the second region of the unitary multi-metallic component.

The unitary multi-metallic component of any preceding clause, wherein the diffusion bond region is substantially free from prior particle boundary particles.

The unitary multi-metallic component of any preceding clause, wherein the iron-based alloy is a steel alloy, and wherein the nickel-based alloy is a nickel-based superalloy.

The method of any preceding clause, wherein the nickel-based layer has an initial thickness, and wherein the diffusion bond region has a diffusion thickness that is greater than the initial thickness of the nickel-based layer.

## Claims

1. A method of forming a multi-metallic component (30), the method comprising:
positioning a nickel-based layer (24) between an iron-based metal alloy (12) and a nickel-based metal alloy (18), wherein the nickel-based layer (24) comprises greater than 50% by weight nickel, and wherein the iron-based metal alloy (12), the nickel-based metal alloy (18), or both is in a powder form; and
applying heat and pressure to the iron-based metal alloy (12) and the nickel-based metal alloy (18) such that the nickel-based layer (24) forms a diffusion bond region (32) between a first region (14) comprising the iron-based metal alloy (12) and a second region (20) comprising the nickel-based metal alloy (18) to form the multi-metallic component (30).

2. The method of any preceding claim, wherein the iron-based metal alloy (12) comprises a plurality of iron-based metal alloy (12) particles, and wherein the nickel-based metal alloy (18) comprises a plurality of nickel-based metal alloy (18) particles.

3. The method of any preceding claim, wherein the nickel-based layer (24) defines a first surface (26) and an opposite second surface (28), wherein positioning the nickel-based layer (24) between the iron-based metal alloy (12) and the nickel-based metal alloy (18) comprises positioning the first surface (26) in direct contact with the iron-based metal alloy (12) and positioning the opposite second surface (28) in direct contact with the nickel-based metal alloy (18).

4. The method of any preceding claim, wherein the nickel-based layer (24) is substantially free from a carbide forming element and substantially free from a nitride forming element.

5. The method of any preceding claim, wherein the nickel-based layer (24) is substantially free from Ti, Ta, Hf, Nb, and W.

6. The method of any preceding claim, wherein the nickel-based layer (24) comprises greater than 90% by weight nickel.

7. The method of any preceding claim, wherein the nickel-based layer (24) consists essentially of nickel.

8. The method of any preceding claim, wherein the nickel-based layer (24) has an initial thickness of 5 µm to 100 µm.

9. The method of any preceding claim, wherein the nickel-based layer (24) has an initial thickness of 15 µm to 50 µm.

10. The method of any preceding claim, wherein the nickel-based layer (24) has an initial thickness, and wherein the diffusion bond region (32) has a diffusion thickness that is greater than the initial thickness of the nickel-based layer (24).

11. The method of any preceding claim, wherein the diffusion bond region (32) is substantially free from prior particle boundary particles.

12. The method of any preceding claim, wherein the iron-based metal alloy (12) is a steel alloy, and wherein the nickel-based metal alloy (18) is a nickel-based superalloy.

13. The method of any preceding claim, wherein applying heat and pressure comprises heating to a temperature of 900 °C to 1300 °C at an isostatic pressure that is 70 MPa or greater.

14. A unitary multi-metallic component (30), comprising:
an iron-based metal alloy (12) defining a first region (14) of the unitary multi-metallic component (30);
a nickel-based metal alloy (18) defining a second region (20) of the unitary multi-metallic component (30); and
a diffusion bond region (32) extending into the iron-based metal alloy (12) and the nickel-based metal alloy (18) to join the first region (14) to the second region (20) within the unitary multi-metallic component (30).

15. The unitary multi-metallic component (30) of claim 14, wherein the diffusion bond region (32) has a first diffusion subregion within the first region (14), wherein the first diffusion subregion has an increased nickel concentration compared to an initial nickel concentration within the first region (14) of the unitary multi-metallic component (30), and
wherein the diffusion bond region (32) has a second diffusion subregion within the second region (20), wherein the second diffusion subregion has an increased nickel concentration compared to an initial nickel concentration within the second region (20) of the unitary multi-metallic component (30), wherein the second diffusion subregion has a second diffusion subregion thickness that is greater than a first diffusion subregion thickness of the first diffusion subregion.
